# EUROPÄISCHE PATENTSCHRIFT

(11) **EP 0 711 192 B1**
(45) Veröffentlichungstag und Bekanntmachung des Hinweises auf die Patenterteilung: **03.12.1997**
(21) Anmeldenummer: 94921075.1
(22) Anmeldetag: 26.07.1994
(51) Int. Cl.: B01D 5/00, B01D 53/26, F28F 1/32, F24F 3/14

(54) **EINRICHTUNG ZUR VERRINGERUNG DES FEUCHTIGKEITSGEHALTS EINES GASFÖRMIGEN MEDIUMS**
ARRANGEMENT FOR REDUCING THE HUMIDITY CONTENT OF A GASEOUS MEDIUM
DISPOSITIF DE REDUCTION DE LA TENEUR EN HUMIDITE D'UN MILIEU GAZEUX

(30) Priorität: 26.07.1993 AT 1488/93
(43) Veröffentlichungstag der Anmeldung: 15.05.1996
(73) Patentinhaber: HIROSS INTERNATIONAL CORPORATION B.V., 1071 DJ Amsterdam (NL)
(72) Erfinder: SALVAGNO, Mauro, I-35036 Montegrotto Terme (IT); POLENTA, Mario, I-30032 Fiesso d'Artico (IT)
(74) Vertreter: Gibler, Ferdinand, Dipl.Ing. Dr. techn.
(86) Internationale Anmeldenummer: IB9400230
(87) Internationale Veröffentlichungsnummer: WO9503103

(56) Entgegenhaltungen:
- DE-A- 2 208 504
- DE-A- 4 022 802
- FR-A- 2 415 274
- FR-A- 2 648 055
- GB-A- 2 085 571

## Beschreibung

Die Erfindung betrifft eine Einrichtung zur Verringerung des Feuchtigkeitsgehalts eines gasförmigen Mediums, insbesonders Luft, mit einem Kühlkreislauf, die mit einer Kühlanlage verbunden ist und die einen einen Hohlkörper umfassenden Verdampfer aufweist, wobei der Verdampfer eine von einem Kühlmittel, wie z.B. Freon, durchströmbare Rohrschlange und eine Reihe von untereinander parallelen, normal zur Rohrschlange ausgerichteten Rippen, zwischen denen das gasförmige Medium in Form eines Gasstroms in einer ersten Richtung geführt ist, umfaßt, und am austrittseitigen Ende des Hohlkörpers eine Vorrichtung zur Umlenkung des Gasstromes in eine Zweite, zur ersten entgegengesetzten Richtung vorgesehen ist, wobei das gasförmige Medium zur Vorkühlung vor dem Eintritt in den Verdampfer und nach dem Austritt aus diesem durch einen Gas/Gas-Wärmetauscher führbar ist.

Derartige Einrichtungen weisen eine schlechten Wirkungsgrad auf und benötigen zur Erfüllung ihrer Funktion sehr große, aufwendige Konstruktionen, die dabei aufgrund ihrer in den Kühlkreislauf einer Kühlanlage integrierten Bauweise nur schwer einer Wartung oder einer Reparatur unterzogen werden können.

Aus der GB-A-2 085 571 ist ein Entfeuchter für komprimierte Gase bekanntgeworden, bei welchem eine Kühlanlage mit einem Verdampfer verbunden ist, der in einem Hohlkörper angeordnet ist. Der Verdampfer ist aus einer mit dem Kühlmittel der Kühlanlage durchströmbaren Rohrschlange gebildet, an der normal zu dieser ausgerichtete Kühlrippen vorgesehen sind. Die komprimierte Luft wird über einen an einer Seitenwand des Verdampfers angeordneten Gas/Gas-Wärmetauscher vorgekühlt und dann in den Hohlkörper mit dem Verdampfer geleitet, wo sie weiter abgekühlt und entfeuchtet wird. Anschließend gelangt die gekühlte und getrocknete Luft in die Leitungsrohre des benachbarten Wärmetauschers und bewirkt somit die Vorkühlung der eintretenden Luft.

Weiters ist in der FR-A-2 648 055 eine Einrichtung zur Entfeuchtung von Gasen beschrieben, die mit dem Kühlkreislauf einer Kühlanlage verbunden ist. Die Einrichtung weist einen Verdampfer auf den der Gasstrom in einer Richtung durchströmt und der zur Vorkühlung des Gasstromes mit einem Gas/Gas-Wärmetauscher verbunden ist, in welchem parallele Rohre mit Kühlrippen und Blenden zum Erzwingen eines schlangenförmigen Weges des Gasstromes vorgesehen sind.

Aufgabe der Erfindung ist es, eine Einrichtung der eingangs genannten Art mit hohem Wirkungsgrad und dadurch verhältnismäßig kleineren Gesamtabmessungen zu schaffen. Eine weitere Aufgabe der Erfindung ist es, eine einfache Demontage der Einrichtung und deren Trennung von der übrigen Anlage bei Wartungsarbeiten oder Reparaturen zu ermöglichen.

Dies wird erfindungsgemäß dadurch erreicht, daß die normal zur Rohrschlange ausgerichteten Rippen als Längsrippen ausgebildet sind, längs denen der Gasstrom innerhalb des Hohlkörpers geführt ist, wobei die Seitenwände des Hohlkörpers durch Längsrippen gebildet sind, daß der Hohlkörper unter Bildung eines sich über dessen gesamte Länge erstreckenden Zwischenraumes von einem äußeren Gehäuse umschlossen ist, wobei der Gasstrom nach Durchströmen der Vorrichtung zur Umlenkung durch den zwischen Gehäusewand und Hohlkörperseitenwände gebildeten Zwischenraum in der zweiten Richtung geführt ist.

In weiterer Ausbildung der Erfindung kann vorgesehen sein, daß zwischen dem Hohlkörper und dem Gehäuse ein Kondensatabscheider angeordnet ist, sodaß der in der Vorrichtung zur Umlenkung umgelenkte Gasstrom durch den Kondensatabscheider in den Zwischenraum eintritt.

Weiters kann vorgesehen sein, daß die Vorrichtung zur Umlenkung des Gasstromes aus einem haubenförmigen Endstück gebildet ist, welches an das Gehäuse anschließt.

Eine weitere Ausführungsform der Erfindung kann darin bestehen, daß der Kondensatabscheider durch eine ringförmige Anordnung aus Fasern, z.B korrosionsbeständigen Stahlfasern, gebildet ist.

Nach einem weiteren Merkmal der Erfindung kann vorgesehen sein, daß am Gehäuse eine mit dem Kondensatabscheider verbundene, erste Kondensat-Abflußfalle angeordnet ist. Eine derartige Kondesat-Abflußfalle sammelt die vom Kondensatabscheider abgeschiedene Flüssigkeit und leitet sie zu einem Abfluß weiter, wodurch ein nachteiliges Zurückfließen der ausgefallenen Flüssigkeitströpfchen in Gegenrichtung zum Medienstrom vermieden wird.

In weiterer Ausbildung der Erfindung kann vorgesehen sein, daß mit dem Gehäuse eine rohrförmige Öffnung mit Flanschansatz verbunden ist, in dem der Gasstrom in der zur ersten entgegengesetzten, zweiten Richtung geführt ist. Auf diese Art kann der Gasstrom, der den Verdampfer bereits in zwei Richtungen durchlaufen hat, diesen wieder verlassen.

Zufolge einer weiteren vorteilhaften Ausbildung der Erfindung ist das Gehäuse rohrförmig ausgebildet, wobei ein Ende desselben durch eine Haube abgeschlossen und an dessen anderem Ende ein Flansch ausgebildet ist, welcher durch ein Endstück verschließbar oder mit dem Wärmeaustauscher verbindbar ist. Auf diese Art wird eine einfache Konstruktion realisiert, bei der auch Elemente zur weiteren Verbesserung des Wirkungsgrades angeschlossen werden können und wodurch eine problemlose Wartung des Verdampfers möglich ist.

Nach einer weiteren Variante kann vorgesehen sein, daß sie einen Gas/Gas-Wärmeaustauscher umfaßt, welcher aus einem ein Rohraggregat mit Rippen umschließenden Behälter gebildet ist, an dessen einem Ende ein Verbindungsflansch zum Verdampfer und an dessen anderem Ende eine Lufteintrittsmündung vorgesehen ist. Ein derartig mit dem Verdampfer verbundener Austauscher kühlt den zu trocknenden Gasstrom vor, und erwärmt den aus dem Verdampfer kommenden Gasstrom wieder, sodaß der Verdampfer eine geringere Temperaturdifferenz zu bewältigen hat und der in seinem Feuchtigkeitsgehalt verringerte Gasstrom die Einrichtung nach seiner Abkühlung wieder erwärmt verläßt.

Gemaß einer weiteren vorteilhaften Ausbildung der Erfindung kann vorgesehen sein, daß die Rohre des Rohraggregats zueinander parallel und parallel zur Behälterlängsrichtung angeordnet sind, daß das Rohraggregat an seinen beiden Enden den Behälter gegenüber diesen abschließende Endplatten aufweist, wobei innerhalb der Rohre ein Gasstrom in erster Richtung und außerhalb der Rohre ein Gasstrom in zweiter, zur ersten entgegengesetzter Richtung geführt ist. Auf diese Weise wird durch den abgekühlten Gasstrom aus dem Verdampfer das in den Austauscher eintretende Gas vorgekühlt.

In weiterer Ausbildung der Erfindung kann vorgesehen sein, daß das Rohraggregat mit Rippen von den Wänden des Behälters beabstandet angeordnet ist und Blenden zum Erzwingen eines auf schlangenförmigem Weg parallel zu den Rippen verlaufenden Gasstroms angeordnet sind. Daraus ergibt sich für den vom Verdampfer kommenden Gasstrom ein entsprechend langer Weg auf dem Kälte auf den innerhalb der Rohre des Rohraggregats in Gegenrichtung geführten Gasstrom übertragen und dessen Abkühlung bewirkt wird.

Eine bevorzugte Ausbildung der Erfindung besteht darin, daß an dem Behälter eine Gasaustrittsmündung vorgesehen ist.

Nach einer weiteren Variante kann vorgesehen sein, daß im Bereich der Gaseintrittsmündung ein Filter angeordnet ist. Dadurch werden die im in den Austauscher eintretenden Gasstrom vorhandenen Fremdpartikel aus diesem entfernt.

Schließlich besteht eine Ausführungsform der Erfindung darin, daß im Bereich des Verbindungsflansches zum Verdampfer eine weite Kondensat-Abflußfalle vorgesehen ist. Eine derart angeordnete Abflußfalle sammelt die nach dem Austauscher infolge der Abkühlung aus dem Gasstrom kondensierte Flüssigkeit und leitet sie einem Abfluß zu. Die im gasförmigen Medium enthaltene Feuchtigkeit besteht in den meisten Fällen aus Wasserdampf, es sind aber jegliche andere Flüssigkeitsdämpfe im Umfang der Erfindung enthalten.

Die Erfindung wird im folgenden anhand der angeschlossenen Zeichnungen näher beschrieben.

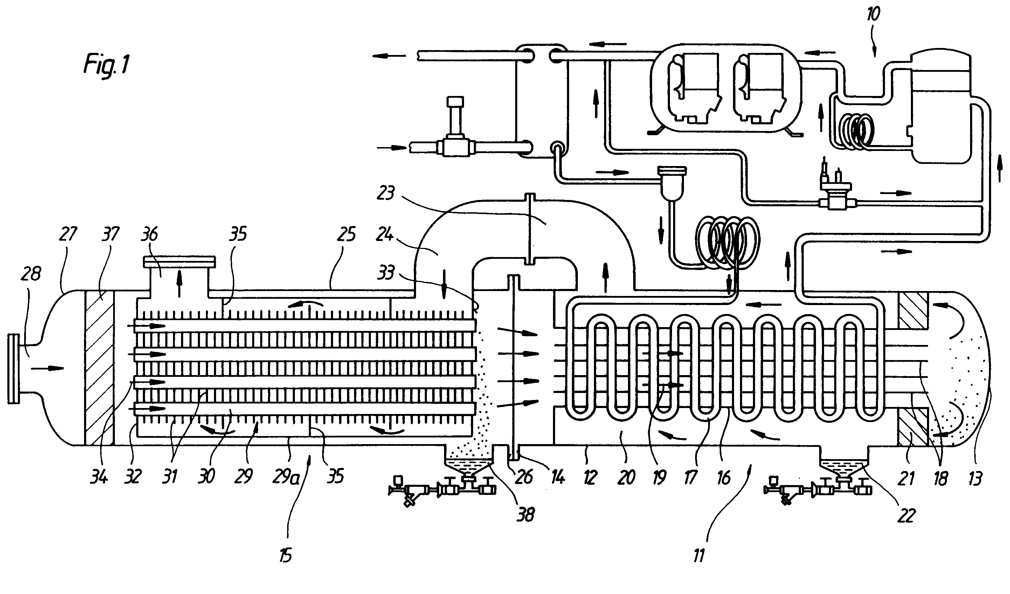

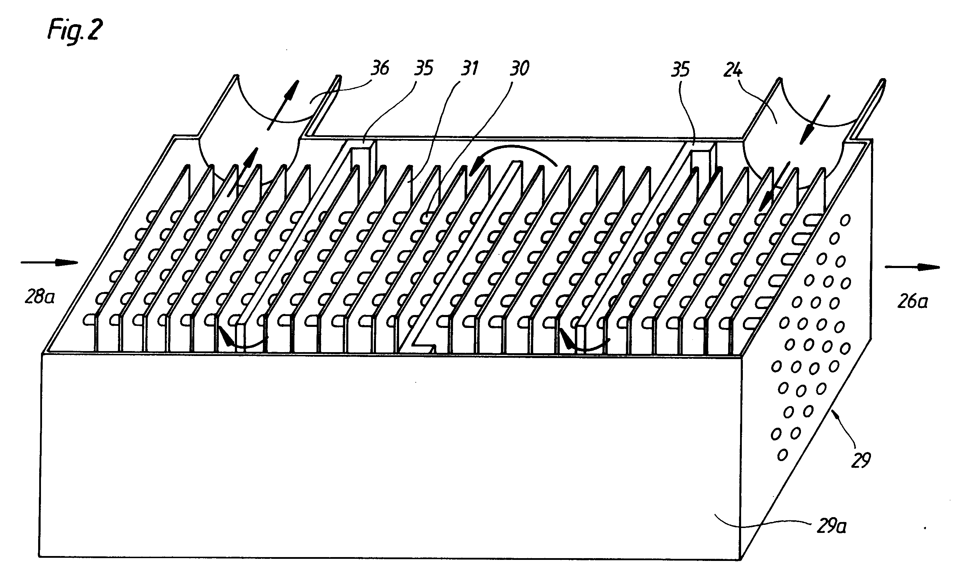

Es zeigen Fig.1 eine schematische Ansicht einer Ausführungsform einer erfindungsgemäßen Einrichtung; Fig.2 eine detaillierte Ansicht einer Ausführungsform eines Gas/Gas-Wärmeaustauschers.

In Fig. 1 ist eine erfindungsgemäße Einrichtung mit einem Kühlkreislauf dargestellt, welche einen mit einer an sich bekannten Kühlanlage 10 verbundenen Verdampfer 11 und einen an diesen anschließenden Gas/Gas-Wärmeaustauscher 15 umfaßt. In diesem Ansführungsbeispiel besteht das gasförmige Medium aus einem Luftstrom, der vor dem Eintritt in die erfindungsgemäße Einrichtung einen hohen Feuchtigkeitsgehalt bestehend aus Wasserdampf aufweist. Die Erfindung ist in dieser Hinsicht jedoch nicht eingeschränkt. Es kann jedes beliebige gasförmige Medium mit einem Feuchtigkeitsgehalt aus beliebigen Dämpfen einer Trocknung unterzogen werden. Der Verdampfer 11 ist von einem äußeren, rohrförmigen Metallgehäuse 12 umschlossen, welches an seinem einen Ende mit einer Haube 13 abgeschlossen und an seinem anderem Ende über einen Flansch 14 mit dem Wärmeaustauscher 15 in Verbindung steht. Der Verdampfer 11 selbst wird aus einem länglichen Hohlkörper 16 gebildet, der entlang seiner Länge eine Rohrschlange 17 aus Kupfer beinhaltet, in welcher das Kühlmittel, in diesem Fall Freon, aus der Kühlanlage 10 geführt ist. Der Hohlkörper 16 beinhaltet eine Reihe von untereinander parallelen Längsrippen 18 aus Aluminium, die quer zur Rohrschlange 17 angeordnet sind und zwischen denen ein vom Austauscher kommender Luftstrom in Richtung des Pfeils 19 geführt ist. Der Hohlkörper 16, der mit einem nicht dargestellten System aus Schrauben und einem Gestänge am rohrförmigen Metallgehäuse 12 befestigt ist, kann zu Wartungszwecken oder Reparaturarbeiten aus diesem gezogen werden. Weiters sind Führungen zur optimalen Positionierung des Hohlkörpers 16 vorgesehen. Nachdem der Luftstrom zwischen den Längsrippen 18 hindurchgetreten ist, wird er an der Innenseite der Haube 13 in seiner Richtung umgekehrt und in dem zwischen dem Gehäuse 12 und dem Hohlkörper 16 gebildeten Zwischenraum 20 in der zur Richtung 19 entgegengesetzten Richtung wieder entlang des Hohlkörpers 16 geführt. Im Bereich der Haube 13 ist im Inneren des Gehäuses 12 ein Kondensatabscheider 21 angeordnet, der aus einer ringförmigen Anordnung aus korrosionsbeständigen Stahlfasern gebildet ist und der die kondensierten Wassertröpchen, die sich nach dem Durchlaufen der Rippen 18 und während der Richtungsumkehr des Luftstroms zufolge seiner Abkühlung bilden, zurückhalten. Eine am Gehäuse 12 angebrachte, erste Kondensat-Abflußfalle 22 fängt das durch den Abscheider 21 zurückgehaltenen Wasser auf, welches über ein Ventil weiter abgeleitet werden kann. An dem der Haube 13 gegenüberliegenden Ende des Gehäuses 12 ist im Bereich des Flansches 14 eine rohrförmige Öffnung 23 mit Flansch angeordnet, durch die der durch den Zwischenraum 20 geführte Luftstrom austreten kann und die mit einer korrespondierenden Öffnung 24 mit Flansch, die in den Austauscher 15 führt, verbunden ist. Der Wärmeaustauscher 15 ist von einem Behälter 25 umschlossen, welcher an seinem einen Ende einen zum Flansch 14 passenden Verbindungsflansch 26 und an seinem anderen Ende eine Eintrittshaube 27 mit einer Lufteintrittsöffnung 28 zum Lufteintritt aufweist. Der Austauscher 15 selbst besteht aus einem Rohraggregat 29, welches in einem kastenförmigen Körper 29a untergebracht ist. Das Aggregat 29 setzt sich aus Aluminiumrohren 30 mit inneren dreischichtigen Rippen, die parallel zueinander und parallell zur Längsrichtung des Behälters 25 angeordnet sind, und einer Reihe von quer zur Längsrichtung stehenden Rippen 31 aus Kupfer, welche erstere kreuzen, zusammen. An seinen Enden weist das Rohraggregat 29 Platten 32 und 33 auf, die die beiden Endbereiche des Behälters 25 gegenüber dessen dazwischenliegendem Innenteil abschließen. Im Inneren der Rohre 30 ist ein Luftstrom in Richtung der Pfeile 34 geführt, während außerhalb ein aus dem Verdampfer 11 über die Öffnungen 23 und 24 kommender Luftstrom in dazu entgegengesetzter Richtung geführt ist. Um außerhalb der Rohre 30 einen Luftstrom durchzulassen, ist das Rohraggregat 29 von der Wandung des Behälters 25 distanziert angeordnet. Weiters sind Blenden 35 vorgesehen, die den Luftstrom auf eine schlangenförmige Bahn parallel zu den Rippen 31 Weg zwingen. Am Behälter 25 ist ferner eine Luftaustrittsmündung 36 vorgesehen, aus der der Luftstrom nach Durchlaufen der durch die Blenden 35 abgeteilten Bereiche nach außen geführt wird. Im Bereich der Eintrittshaube 27 für den Lufteintritt ist ein Filter 37 angebracht, der die eventuell im eintretenden Luftstrom vorhandenen Verunreinigungen zurückhält, während im Bereich vor dem Verbindungsflansch 26 eine zweite Kondensat-Abflußfallle 38 für die im Luftstrom ausfallenden Wassertröpfchen vorgesehen ist. Der Luft/Luft-Wärmeaustauscher 15 nutzt den aus dem Verdampfer 11 kommenden Luftstrom, der bereits eine Abkühlung erfahren hat, zur Vorkühlung des über die Mündung 28 eintretenden Luftstroms, wodurch sich ein beträchtliche Erhöhung des Wirkungsgrades gegenüber bekannten Einrichtungen dieser Art einstellt. Danach erfolgt im Inneren des Verdampfers 11 die weitere Abkühlung des Luftstroms bis zum Taupunkt durch das Verdampfen des Freons in der Rohrschlange 17. Gleichzeitig wird die aus dem Verdampfer 11 austretende Luft beim Durchgang durch den Austauscher 15 auf der Außenseite des Rohraggregats 29 wieder erhitzt. Mit Hilfe des Austauschers 15 erreicht somit die Luft den Verdampfer 11 mit einer viel tieferen Temperatur, wodurch der Kühlkreislauf 10 in seiner Kühlleistung weniger beansprucht wird. Alle innerhalb der Einrichtung gelegenen Teile sind mit einem korrosionsschützenden Epoxyfirnis ausgekleidet, der gegen das ausfallende Kondenswasser beständig ist.

In Fig. 2 ist ein erfindungsgemäßer Luft/Luft-Wärmeaustauscher mit einem kastenförmigen Körper 29a und dem von diesem eingeschlossenen Rohraggregat 29 mit den Querrippen 31 dargestellt. Die Rohre 30 aus Aluminium verlaufen untereinander parallel und in Längsrichtung des Körpers 29a und senkrecht zu den Rippen 31. Der Luftstrom, der über die nicht dargestellte Mündung 28 bei 28a in den Austauscher 15 eintritt und durch das Innere der Rohre geführt ist, verläßt dieser wieder im Bereich des nichtdargestellten Flansches 26 bei 26a und wird dem Verdampfer 11 zugeführt. Dazu in entgegengesetzter Richtung kommt ein Luftstrom, der den Verdampfer bereits passiert hat, durch die Öffnung 24 in den durch die Endplatten 32, 33 gegenüber dem Eintritts- und dem Austrittsbereich der Rohre 30 abgeschlossenen Teil des Körpers 29a und wird darin serpentinenartig immer parallel zu einem Teil der Rippen 31 geführt, wobei dieser Weg durch entsprechend angeordnete Blenden 35 erzwungen wird. Auf diesem Weg überträgt der bereits getrocknete Luftstrom aus dem Verdampfer 11 seine Kälte über die Rippen auf den in den Rohren 30 geführten Luftstrom, der somit vorgekühlt wird.

## Patentansprüche

1. Einrichtung zur Verringerung des Feuchtigkeitsgehalts eines gasförmigen Mediums, insbesonders Luft, mit einem Kühlkreislauf, die mit einer Kühlanlage (10) verbunden ist und die einen einen Hohlkörper (16) umfassenden Verdampfer (11) aufweist, wobei der Verdampfer (11) eine von einem Kühlmittel, wie z.B. Freon, durchströmbare Rohrschlange (17) und eine Reihe von untereinander parallelen, normal zur Rohrschlange (17) ausgerichteten Rippen (18), zwischen denen das gasförmige Medium in Form eines Gasstroms in einer ersten Richtung geführt ist, umfaßt, und am austrittseitigen Ende des Hohlkörpers (16) eine Vorrichtung zur Umlenkung (13) des Gasstromes in eine zweite, zur ersten entgegengesetzten Richtung vorgesehen ist, wobei das gasförmige Medium zur Vorkühlung vor dem Eintritt in den Verdampfer und nach dem Austritt aus diesem durch einen Gas/Gas-Wärmetauscher (15) führbar ist, **dadurch gekennzeichnet**, daß die normal zur Rohrschlange (17) ausgerichteten Rippen als Längsrippen (18) ausgebildet sind, längs denen der Gasstrom innerhalb des Hohlkörpers (16) geführt ist, wobei die Seitenwände des Hohlkörpers (16) durch Längsrippen (18) gebildet sind, daß der Hohlkörper (16) unter Bildung eines sich über dessen gesamte Länge erstreckenden Zwischenraumes (20) von einem äußeren Gehäuse (12) umschlossen ist, wobei der Gasstrom nach Durchströmen der Vorrichtung zur Umlenkung (13) durch den zwischen Gehäusewand und Hohlkörperseitenwände gebildeten Zwischenraum (20) in der zweiten Richtung geführt ist.

2. Einrichtung nach Anspruch 1, **dadurch gekennzeichnet**, daß zwischen dem Hohlkörper (16) und dem Gehäuse (12) ein Kondensatabscheider (21) angeordnet ist. sodaß der in der Vorrichtung zur Umlenkung (13) umgelenkte Gasstrom durch den Kondensatabscheider (21) in den Zwischenraum (20) eintritt.

3. Einrichtung nach Anspruch 1 oder 2, **dadurch gekennzeichnet**, daß die Vorrichtung zur Umlenkung (13) des Gasstromes aus einem haubenförmigen Endstück gebildet ist, welches an das Gehäuse (12) anschließt.

4. Einrichtung nach Anspruch 2 oder 3, **dadurch gekennzeichnet**, daß der Kondensatabscheider (21) durch eine ringförmige Anordnung aus Fasern, z.B korrosionsbeständigen Stahlfasern, gebildet ist.

5. Einrichtung nach Anspruch 2, 3 oder 4, **dadurch gekennzeichnet**, daß am Gehäuse (12) eine mit dem Kondensatabscheider (21) verbundene, erste Kondensat-Abflußfalle (22) angeordnet ist.

6. Einrichtung nach einem der vorhergehenden Ansprüche, **dadurch gekennzeichnet**, daß mit dem Gehäuse (12) eine rohrförmige Öffnung (23) mit Flanschansatz verbunden ist, in dem der Gasstrom in der zur ersten entgegengesetzten, zweiten Richtung geführt ist.

7. Einrichtung nach Anspruch 3 bis 6, **dadurch gekennzeichnet**, daß das Gehäuse (12) rohrförmig ausgebildet ist, wobei ein Ende desselben durch eine Haube (13) abgeschlossen und an dessen anderem Ende ein Flansch (14) ausgebildet ist, welcher durch ein Endstück verschließbar oder mit dem Wärmeaustauscher (15) verbindbar ist.

8. Einrichtung nach einem der vorhergehenden Ansprüche, **dadurch gekennzeichnet**, daß der Gas/Gas-Wärmeaustauscher (15) aus einem ein Rohraggregat (29) mit Rippen (31) umschließenden Behälter (29a) gebildet ist, an dessen einem Ende ein Verbindungsflansch (26) zum Verdampfer (11) und an dessen anderem Ende eine Gaseintrittsmündung (28) vorgesehen ist.

9. Einrichtung nach Anspruch 8, **dadurch gekennzeichnet**, daß die Rohre (30) des Rohraggregats (29) zueinander parallel und parallel zur Behälterlängsrichtung angeordnet sind, daß das Rohraggregat (29) an seinen beiden Enden den Behälter (29a) gegenüber diesen abschließende Endplatten (32, 33) aufweist, wobei innerhalb der Rohre (30) ein Luftstrom in erster Richtung und außerhalb der Rohre (30) ein Luftstrom in zweiter, zur ersten entgegengesetzter Richtung geführt ist.

10. Einrichtung nach den Ansprüchen 8 oder 9, **dadurch gekennzeichnet**, daß das Rohraggregat (29) mit Rippen von den Wänden des Behälters (29a) beabstandet angeordnet ist und Blenden (35) zum Erzwingen eines auf schlangenförmigem Weg parallel zu den Rippen (31) verlaufenden Luftstroms angeordnet sind.

11. Einrichtung nach einem oder mehreren der Ansprüche 8 bis 10, **dadurch gekennzeichnet**, daß an dem Behälter (29a) eine Luftaustrittsmündung (36) vorgesehen ist.

12. Einrichtung nach einem oder mehreren der Ansprüche 8 bis 11, **dadurch gekennzeichnet**, daß im Bereich der Lufteintrittsmündung (28) ein Filter (37) angeordnet ist.

13. Einrichtung nach einem oder mehreren der Ansprüche 8 bis 12, **dadurch gekennzeichnet**, daß im Bereich des Verbindungsflansches (26) zum Verdampfer (11) eine zweite Kondensat-Abflußfalle (38) vorgesehen ist.

## Claims

1. Arrangement for reducing the humidity content of a gaseous medium, particularly air, which comprises a refrigerating circuit and which is connected to a refrigerating plant (10) and has an evaporator (11) surrounding a hollow body (16), the evaporator (11) comprising a tube coil (17), through which a refrigerant, such as for example freon, can flow, and a series of ribs (18) which are aligned parallel to one another and at right angles to the tube coil (17) and between which the gaseous medium is passed in the form of a current of gas in a first direction, while at the outlet end of the hollow body (16) a device (13) is provided for diverting the current of gas into a second direction opposite to the first direction and the gaseous medium can be passed through a gas-gas heat exchanger (15) for precooling before entering the evaporator and after passing out of the latter, characterized in that the ribs aligned at right angles to the tube coil (17) are in the form of longitudinal ribs (18) along which the current of gas is guided inside the hollow body (16), while the side walls of the hollow body (16) are formed by longitudinal ribs (18), and in that the hollow body (16) is surrounded by an outer casing (12) such that an interspace (20) extending over the entire length of said hollow body is formed and, after passing through the diverter device (13), the current of gas is passed in the second direction through the interspace (20) formed between the casing wall and the side walls of the hollow body.

2. Arrangement according to Claim 1, characterized in that a condensate separator (21) is arranged between the hollow body (16) and the casing (12), so that the current of gas diverted in the diverter device (13) enters the interspace (20) via the condensate separator (21).

3. Arrangement according to Claim 1 or 2, characterized in that the device (13) for diverting the current of gas is formed by a hood-shaped end piece adjoining the casing (12).

4. Arrangement according to Claim 2 or 3, characterized in that the condensate separator (21) is formed by an annular arrangement of fibres, for example corrosion-resistant steel fibres.

5. Arrangement according to Claim 2, 3 or 4, characterized in that a first condensate outlet trap (22) connected to the condensate separator (21) is arranged on the casing (12).

6. Arrangement according to one of the preceding claims, characterized in that a tubular opening (23) having a flange attachment is connected to the casing (12), in which flange attachment the current of gas is guided in the second direction, opposite to the first direction.

7. Arrangement according to Claims 3 to 6, characterized in that the casing (12) is tubular in shape, one of its ends being closed by a hood (13) while formed on its other end is a flange (14), which can be closed by an end piece or be connected to the heat exchanger (15).

8. Arrangement according to one of the preceding claims, characterized in that the gas-gas heat exchanger (15) is composed of a container (25) which surrounds a set of tubes (29) provided with ribs (31) and at one end of which a flange (26) for connection to the evaporator (11) and at the other end of which a gas inlet mouth (28) are provided.

9. Arrangement according to Claim 8, characterized in that the tubes (30) of the set of tubes (29) are arranged parallel to one another and parallel to the longitudinal direction of the container, and in that the set of tubes (29) has, at each end, end plates (32, 33) which close off the container (25) relative to the said tubes, while inside the tubes (30) a current of air is passed in the first direction and outside the tubes (30) a current of air is passed in the second direction, opposite to the first direction.

10. Arrangement according to Claim 8 or 9, characterized in that the set of tubes (29) provided with ribs is spaced apart from the walls of the container (25) and baffles (35) are arranged to bring about a current of air flowing on a serpentine path parallel to the ribs (31).

11. Arrangement according to one or more of Claims 8 to 10, characterized in that an air outlet mouth (36) is provided on the container (25).

12. Arrangement according to one or more of Claims 8 to 11, characterized in that a filter (37) is arranged in the region of the air inlet mouth (28).

13. Arrangement according to one or more of Claims 8 to 12, characterized in that a second condensate outlet trap (38) is provided in the region of the flange (26) for connection to the evaporator (11).

## Revendications

1. Appareil pour la réduction de la teneur en humidité d'un fluide gazeux, en particulier de l'air, comportant un circuit de réfrigération, lequel appareil est relié à une installation de réfrigération (10) et présente un évaporateur (11) comprenant un corps creux (16), cet évaporateur (11) comprenant un serpentin (17) dans lequel peut passer un agent réfrigérant, par exemple du fréon, et une série d'ailettes (18) parallèles et orientées perpendiculairement à ce serpentin (17) entre lesquelles le fluide gazeux passe sous forme d'un courant de gaz dans une première direction, et à l'extrémité côté sortie du corps creux (16) étant prévu un dispositif de déviation (13) qui dévie le courant de gaz dans une deuxième direction opposée à la première, et le fluide gazeux, pour son prérefroidissement, pouvant, avant d'entrer dans l'évaporateur et après être sorti de celui-ci, traverser un échangeur de chaleur gaz/gaz (15), caractérisé par le fait que les ailettes orientées perpendiculairement au serpentin (17) sont des ailettes longitudinales (18) le long desquelles le courant de gaz passe à l'intérieur du corps creux (16), les parois latérales du corps creux (16) étant formées par des ailettes longitudinales (18), que le corps creux (16) est entouré d'une enveloppe extérieure (12) avec formation d'un espace intermédiaire (20) s'étendant sur toute sa longueur, le courant de gaz, après avoir traversé le dispositif de déviation (13), passant dans la deuxième direction par l'espace intermédiaire (20) formé entre la paroi enveloppe et les parois latérales du corps creux.

2. Appareil selon la revendication 1, caractérisé par le fait qu'entre le corps creux (16) et l'enveloppe (12) est placé un séparateur de condensat (21), de sorte que le courant de gaz dévié dans le dispositif de déviation (13) entre dans l'espace intermédiaire (20) en traversant ce séparateur de condensat (21).

3. Appareil selon l'une des revendications 1 et 2, caractérisé par le fait que le dispositif de déviation (13) déviant le courant de gaz est formé d'une pièce d'extrémité en forme de calotte qui est jointe à l'enveloppe (12).

4. Appareil selon l'une des revendications 2 et 3, caractérisé par le fait que le séparateur de condensat (21) est formé par un assemblage annulaire de fibres, par exemple de fibres d'acier résistant à la corrosion.

5. Dispositif selon l'une des revendications 2, 3 et 4, caractérisé par le fait que sur l'enveloppe (12) est placé un premier piège d'écoulement de condensat (22) relié au séparateur de condensat (21).

6. Appareil selon l'une des revendications précédentes, caractérisé par le fait qu'à l'enveloppe (12) est jointe une ouverture tubulaire à bride (23) dans laquelle le courant de gaz passe dans la deuxième direction opposée à la première.

7. Appareil selon l'une des revendications 3 à 6, caractérisé par le fait que l'enveloppe (12) est tubulaire, une extrémité de celle-ci étant fermée par une calotte (13) et à l'autre extrémité de celle-ci étant faite une bride (14) qui peut être obturée par une pièce d'extrémité ou être jointe à l'échangeur de chaleur (15).

8. Appareil selon l'une des revendications précédentes, caractérisé par le fait que l'échangeur de chaleur gaz/gaz (15) est formé d'un récipient (29a) entourant un groupe de tubes (29) à ailettes (31) et à une extrémité duquel est prévue une bride (26) de raccordement à l'évaporateur (11) et à l'autre extrémité duquel est prévu un orifice d'entrée de gaz (28).

9. Appareil selon la revendication 8, caractérisé par le fait que les tubes (30) du groupe de tubes (29) sont disposés parallèlement les uns aux autres et à la direction longitudinale du récipient, que le groupe de tubes (29) présente à ses deux extrémités des plaques d'extrémité (32, 33) isolant le récipient (29a) de celles-ci, un courant d'air passant à l'intérieur des tubes (30) dans une première direction et un courant d'air passant à l'extérieur des tubes (30) dans une deuxième direction opposée à la première.

10. Appareil selon l'une des revendications 8 et 9, caractérisé par le fait que le groupe de tubes à ailettes (29) est écarté des parois du récipient (29a) et il est prévu des diaphragmes (35) destinés à produire un courant d'air parallèle aux ailettes (31) suivant un chemin serpentant.

11. Appareil selon une ou plusieurs des revendications 8 à 10, caractérisé par le fait que sur le récipient (29a) est prévu un orifice de sortie d'air (36).

12. Appareil selon une ou plusieurs des revendications 8 à 11, caractérisé par le fait que dans la zone de l'orifice d'entrée d'air (28) est placé un filtre (37).

13. Appareil selon une ou plusieurs des revendications 8 à 12, caractérisé par le fait que dans la zone de la bride (26) de raccordement à l'évaporateur (11) est prévu un deuxième piège d'écoulement de condensat (38)..
